# EUROPEAN PATENT APPLICATION

(11) **EP 4 801 135 A2**
(43) Date of publication of application: **02.09.2026**
(21) Application number: 24882548.1
(22) Date of filing: 29.03.2024
(51) Int. Cl.: H04W 60/04, H04W 76/12, H04W 76/38, H04W 48/18

(54) **APPARATUS AND METHOD FOR CONFIGURING SLICE DEREGISTRATION INACTIVITY TIMER IN WIRELESS COMMUNICATION SYSTEM**

(30) Priority: 24.10.2023 US 202363545365 P
(71) Applicant: LG Electronics Inc., Yeongdeungpo-gu Seoul 07336 (KR)
(72) Inventor: KIM, Minseon, Seoul 06772 (KR); KIM, Hyunsook, Seoul 06772 (KR); CHOE, Hyunjung, Seoul 06772 (KR)
(74) Representative: Jung, Minkyu
(86) International application number: PCT/KR2024/004032
(87) International publication number: WO 2025/089516

(57) **Abstract**

The present disclosure relates to an apparatus and a method for configuring a slice deregistration inactivity timer in a wireless communication system. This method performed by a network node comprises the steps of: receiving, from a terminal, a first message for requesting registration; transmitting, to the terminal, a second message for accepting the registration; configuring a protocol data unit (PDU) session for the terminal; transmitting a third message indicating release of the PDU session; and starting a slice deregistration inactivity timer related to a slice for the terminal, wherein the value of the slice deregistration inactivity timer can be determined on the basis of information obtained using a network data analytics function (NWDAF) node.

## Description

### TECHNICAL FIELD

The following description relates to a wireless communication system, and more specifically, to an apparatus and method for configuring a slice deregistration inactivity timer in a wireless communication system.

### BACKGROUND ART

Wireless access systems are being widely deployed to provide various types of communication services such as voice and data. Generally, a wireless access system is a multiple access system that can support communication with multiple users by sharing available system resources (bandwidth, transmission power, etc.). Examples of multiple access systems include Code Division Multiple Access (CDMA) systems, Frequency Division Multiple Access (FDMA) systems, Time Division Multiple Access (TDMA) systems, Orthogonal Frequency Division Multiple Access (OFDMA) systems, Single Carrier Frequency Division Multiple Access (SC-FDMA) systems, and the like.

In particular, as many communication devices require large communication capacity, enhanced Mobile Broadband (eMBB) communication technology that is improved compared to existing Radio Access Technology (RAT) has been proposed. In addition, communication systems considering not only massive Machine Type Communications (mMTC) that connects multiple devices and objects to provide various services anytime and anywhere, but also reliability and latency sensitive services/User Equipment (UE) have been proposed. Various technical configurations for this purpose are being proposed.

### DISCLOSURE

### TECHNICAL PROBLEM

The present disclosure relates to an apparatus and method for configuring a slice deregistration inactivity timer in a wireless communication system.

The present disclosure relates to an apparatus and method for configuring a slice deregistration inactivity timer value using a Network Data Analytics Function (NWDAF) in a wireless communication system.

The present disclosure relates to an apparatus and method for adjusting a slice deregistration inactivity timer value based on information periodically exchanged between an Access and Mobility Management Function (AMF) and an NWDAF in a wireless communication system.

The present disclosure relates to an apparatus and method for adjusting a slice deregistration inactivity timer value based on at least one of network load information, AMF load information, and a number of usage failure reports in a wireless communication system.

The present disclosure relates to an apparatus and method for transmitting an adjusted slice deregistration inactivity timer value to a User Equipment (UE) using a registration accept message or a UE configuration update command message in a wireless communication system.

The present disclosure relates to an apparatus and method in which an AMF and an NWDAF periodically exchange network data analytics information related to on-demand Single Network Slice Selection Assistance Information (S-NSSAI) in a wireless communication system.

The technical objectives to be achieved by the present disclosure are not limited to the matters mentioned above, and other technical problems not mentioned may be considered by those skilled in the art to which the technical configuration of the present disclosure is applied from the embodiments of the present disclosure to be described below.

### TECHNICAL SOLUTION

As an example of the present disclosure, a method performed by a network node in a wireless communication system may comprise receiving a first message requesting registration from a user equipment (UE), transmitting a second message accepting registration to the UE, establishing a Protocol Data Unit (PDU) session for the UE, transmitting a third message indicating release of the PDU session, and starting a slice deregistration inactivity timer related to a slice for the UE, and a value of the slice deregistration inactivity timer may be determined based on information obtained using a Network Data Analytics Function (NWDAF) node.

As an example of the present disclosure, a method performed by a UE in a wireless communication system may comprise transmitting a first message requesting registration to a network node, receiving a second message accepting registration from the network node, establishing a PDU session for the UE and a network, receiving a third message indicating release of the PDU session from the network node, and starting a slice deregistration inactivity timer related to a slice for the UE, and a value of the slice deregistration inactivity timer may be determined based on information obtained, at an Access and Mobility Management Function (AMF) node, from a Network Data Analytics Function (NWDAF) node.

As an example of the present disclosure, a network node in a wireless communication system may comprise a transceiver and a processor coupled to the transceiver, and the processor may receive a first message requesting registration from a UE, transmit a second message accepting registration to the UE, establish a PDU session for the UE, transmit a third message indicating release of the PDU session, and start a slice deregistration inactivity timer related to a slice for the UE, and a value of the slice deregistration inactivity timer may be determined based on information obtained using a NWDAF node.

As an example of the present disclosure, a UE in a wireless communication system may comprise a transceiver and a processor coupled to the transceiver, and the processor may transmit a first message requesting registration to a network node, receive a second message accepting registration from the network node, establish a PDU session for the UE and a network, receive a third message indicating release of the PDU session from the network node, and start a slice deregistration inactivity timer related to a slice for the UE, and a value of the slice deregistration inactivity timer may be determined based on information obtained, at an AMF node, from a NWDAF node.

As an example of the present disclosure, a communication apparatus may comprise at least one processor and at least one computer memory coupled to the at least one processor and storing instructions that, when executed by the at least one processor, direct operations comprising transmitting a first message requesting registration to a network node, receiving a second message accepting registration from the network node, establishing a PDU session for the UE and a network, receiving a third message indicating release of the PDU session from the network node, and starting a slice deregistration inactivity timer related to a slice for the UE, and a value of the slice deregistration inactivity timer may be determined based on information obtained, at an AMF node, from a NWDAF node.

As an example of the present disclosure, a non-transitory computer-readable medium storing at least one instruction may comprise the at least one instruction executable by a processor, and the at least one instruction may cause an apparatus to receive a first message requesting registration from a UE, transmit a second message accepting registration to the UE, establish a PDU session for the UE, transmit a third message indicating release of the PDU session, and start a slice deregistration inactivity timer related to a slice for the UE, and a value of the slice deregistration inactivity timer may be determined based on information obtained using a NWDAF node.

The above-described aspects of the present disclosure are only some of the preferred embodiments of the present disclosure, and various embodiments reflecting the technical features of the present disclosure can be derived and understood by those skilled in the art based on the detailed description of the present disclosure to be described below.

### ADVANTAGEOUS EFFECTS

The following effects may be achieved by embodiments based on the present disclosure.

The present disclosure can prevent unnecessary signaling from occurring due to a difference between an expiration time of a slice deregistration inactivity timer of a UE and an expiration time of a slice deregistration inactivity timer of a network.

The effects obtainable from the embodiments of the present disclosure are not limited to the effects mentioned above, and other effects not mentioned can be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

### BRIEF DESCRIPTION OF THE DRAWINGS

The drawings attached below are provided to help understand the present disclosure, and may provide embodiments of the present disclosure together with detailed description. However, the technical features of the present disclosure are not limited to specific drawings, and the features disclosed in each drawing may be combined with each other to constitute a new embodiment. Reference numerals in each drawing may indicate structural elements.
FIG. 1 illustrates an example of a communication system applied to the present disclosure.
FIG. 2 illustrates an example of a UE applicable to the present disclosure.
FIG. 3 illustrates an example of functional separation between NG-RAN and 5th generation core (5GC) applicable to the present disclosure.
FIG. 4 illustrates an example of general architecture of a 5th generation (5G) system applicable to the present disclosure.
FIG. 5 illustrates a network data analytics subscription and/or unsubscription procedure.
FIG. 6 illustrates an example of a slice deregistration inactivity timer running procedure.
FIG. 7 illustrates an example of a slice deregistration inactivity timer running procedure of an AMF according to an embodiment of the present disclosure.
FIG. 8 illustrates an example of a slice deregistration inactivity timer running procedure of a UE according to an embodiment of the present disclosure.
FIG. 9 illustrates an example of a slice deregistration inactivity timer configuration procedure according to an embodiment of the present disclosure.
FIG. 10 illustrates an example of a signaling procedure for configuring a slice deregistration inactivity timer according to an embodiment of the present disclosure.
FIG. 11 illustrates an example of a slice deregistration inactivity timer adjustment procedure according to an embodiment of the present disclosure.

### MODE FOR INVENTION

The following embodiments are combinations of components and features of the present disclosure in predetermined forms. Each component or feature may be considered optional unless explicitly stated otherwise. Each component or feature may be implemented without being combined with other components or features. Also, an embodiment of the present disclosure may be configured by combining some components and/or features. The order of operations described in the embodiments of the present disclosure may be changed. Some configurations or features of one embodiment may be included in another embodiment, or may be replaced with corresponding configurations or features of another embodiment.

In the description of the drawings, procedures or steps that may obscure the gist of the present disclosure are not described, and procedures or steps that can be understood at the level of those skilled in the art are also not described.

Throughout the specification, when a part is said to "comprise" or "include" a component, this means that it may further include other components rather than excluding other components unless specifically stated to the contrary. Also, terms such as "unit", "device", and "module" described in the specification mean a unit that processes at least one function or operation, which may be implemented by hardware, software, or a combination of hardware and software. Also, "a" or "an", "one", "the" and similar related words may be used in a sense including both singular and plural in the context of describing the present disclosure (particularly in the context of the claims below) unless otherwise indicated herein or clearly contradicted by context.

In this specification, the embodiments of the present disclosure have been described focusing on the data transmission and reception relationship between a base station and a mobile station. Here, the base station has meaning as a terminal node of a network that directly communicates with a mobile station. Specific operations described as being performed by a base station in this document may in some cases be performed by an upper node of the base station.

That is, various operations performed for communication with a mobile station in a network consisting of multiple network nodes including a base station may be performed by the base station or other network nodes other than the base station. At this time, 'base station' may be replaced by terms such as fixed station, Node B, eNB (eNode B), gNB (gNode B), ng-eNB, advanced base station (ABS), or access point.

Also, in the embodiments of the present disclosure, a terminal may be replaced by terms such as user equipment (UE), mobile station (MS), subscriber station (SS), mobile subscriber station (MSS), mobile terminal, or advanced mobile station (AMS).

Also, a transmitting end refers to a fixed and/or mobile node that provides data service or voice service, and a receiving end refers to a fixed and/or mobile node that receives data service or voice service. Therefore, in the case of uplink, a mobile station may be a transmitting end and a base station may be a receiving end. Similarly, in the case of downlink, a mobile station may be a receiving end and a base station may be a transmitting end.

The embodiments of the present disclosure may be supported by standard documents disclosed in at least one of wireless access systems including IEEE 802.xx system, 3rd Generation Partnership Project (3GPP) system, 3GPP Long Term Evolution (LTE) system, 3GPP 5th generation (5G) New Radio (NR) system, and 3GPP2 system, and in particular, the embodiments of the present disclosure may be supported by 3GPP technical specification (TS) 38.211, 3GPP TS 38.212, 3GPP TS 38.213, 3GPP TS 38.321, and 3GPP TS 38.331 documents.

Also, the embodiments of the present disclosure may be applied to other wireless access systems and are not limited to the above-described systems. For example, they may be applicable to systems applied after the 3GPP 5G NR system and are not limited to a specific system.

That is, obvious steps or parts not described among the embodiments of the present disclosure may be described with reference to the above documents. Also, all terms disclosed in this document may be described by the above standard documents.

Hereinafter, preferred embodiments according to the present disclosure will be described in detail with reference to the accompanying drawings. The detailed description to be disclosed below together with the accompanying drawings is intended to describe exemplary embodiments of the present disclosure and is not intended to represent the only embodiment in which the technical configuration of the present disclosure may be implemented.

Also, specific terms used in the embodiments of the present disclosure are provided to help understanding of the present disclosure, and the use of such specific terms may be changed to other forms without departing from the technical spirit of the present disclosure.

The following technology may be applied to various wireless access systems such as code division multiple access (CDMA), frequency division multiple access (FDMA), time division multiple access (TDMA), orthogonal frequency division multiple access (OFDMA), single carrier frequency division multiple access (SC-FDMA), and the like.

For clarity of description below, the description is based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" means a standard document detail number. LTE/NR/6G may be collectively referred to as a 3GPP system.

Regarding background technology, terms, abbreviations, etc., used in the present disclosure, reference may be made to matters described in standard documents published before the present disclosure. For example, 36.xxx and 38.xxx standard documents may be referred to.

For terms, abbreviations, and other background technologies that may be used in this document, reference may be made to the following standard document descriptions published before this document. In particular, for LTE/ Evolved Packet System (EPS) related terms, abbreviations, and other background technologies, reference may be made to 36.xxx series, 23.xxx series, and 24.xxx series, and for new radio (NR)/5G system (5GS) related terms, abbreviations, and other background technologies, reference may be made to 38.xxx series, 23.xxx series, and 24.xxx series.

Hereinafter, this specification is described based on the terms defined as above.

The three main requirement areas of 5G include (1) Enhanced Mobile Broadband (eMBB) area, (2) massive Machine Type Communication (mMTC) area, and (3) Ultra-reliable and Low Latency Communications (URLLC) area.

Some use cases may require multiple areas for optimization, and other use cases may focus only on one Key Performance Indicator (KPI). 5G supports these various use cases in a flexible and reliable way.

### Communication System Applicable to the Present Disclosure

Although not limited thereto, various descriptions, functions, procedures, proposals, methods and/or operational flowcharts of the present disclosure disclosed in this document may be applied to various fields requiring wireless communication/connection (e.g., 5G) between devices.

Hereinafter, more specific examples are illustrated with reference to drawings. In the following drawings/descriptions, the same reference numerals may illustrate the same or corresponding hardware blocks, software blocks, or functional blocks unless described otherwise.

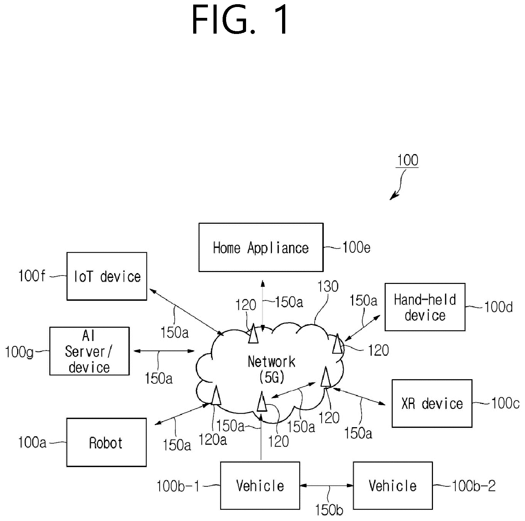

FIG. 1 illustrates an example of a communication system applied to the present disclosure.

Referring to FIG. 1, a communication system 100 applied to the present disclosure includes wireless devices, a base station, and a network. Here, a wireless device means a device that performs communication using wireless access technology (e.g., 5G NR, LTE), and may be referred to as a communication/wireless/5G device. Although not limited thereto, the wireless device may include a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 100g. For example, the vehicle may include a vehicle equipped with wireless communication function, an autonomous vehicle, a vehicle capable of performing vehicle-to-vehicle communication, etc. Here, the vehicles 100b-1 and 100b-2 may include an unmanned aerial vehicle (UAV) (e.g., drone). The XR device 100c includes augmented reality (AR)/virtual reality (VR)/mixed reality (MR) devices, and may be implemented in the form of a head-mounted device (HMD), a head-up display (HUD) installed in a vehicle, television, smartphone, computer, wearable device, home appliance, digital signage, vehicle, robot, etc. The hand-held device 100d may include a smartphone, smart pad, wearable device (e.g., smartwatch, smart glasses), computer (e.g., laptop, etc.), etc. The home appliance 100e may include TV, refrigerator, washing machine, etc. The IoT device 100f may include a sensor, smart meter, etc. For example, the base station 120 and network 130 may also be implemented as wireless devices, and a specific wireless device 120a may operate as a base station/network node for other wireless devices.

The wireless devices 100a to 100f may be connected to the network 130 through the base station 120. AI technology may be applied to the wireless devices 100a to 100f, and the wireless devices 100a to 100f may be connected to an AI server 100g through the network 130. The network 130 may be configured using a 3G network, 4G (e.g., LTE) network, or 5G (e.g., NR) network, etc. The wireless devices 100a to 100f may communicate with each other through the base station 120/network 130, but may also communicate directly (e.g., sidelink communication) without going through the base station 120/network 130. For example, the vehicles 100b-1 and 100b-2 may perform direct communication (e.g., vehicle to vehicle (V2V)/vehicle to everything (V2X) communication). Also, the IoT device 100f (e.g., sensor) may communicate directly with other IoT devices (e.g., sensor) or other wireless devices 100a to 100f.

Wireless communication/connection 150a, 150b, and 150c may be established between the wireless devices 100a to 100f/base station 120 and between base stations 120/120. Here, wireless communication/connection may be achieved through various wireless access technologies (e.g., 5G NR) such as uplink/downlink communication 150a, sidelink communication 150b (or D2D communication), and inter-base station communication 150c (e.g., relay, integrated access backhaul (IAB)). Through wireless communication/connection 150a, 150b, and 150c, wireless devices and base stations/wireless devices, and base stations and base stations may transmit/receive wireless signals to/from each other. For example, wireless communication/connection 150a, 150b, and 150c may transmit/receive signals through various physical channels. To this end, based on various proposals of the present disclosure, at least some of various configuration information setting processes for wireless signal transmission/reception, various signal processing processes (e.g., channel encoding/decoding, modulation/demodulation, resource mapping/demapping, etc.), resource allocation processes, etc., may be performed.

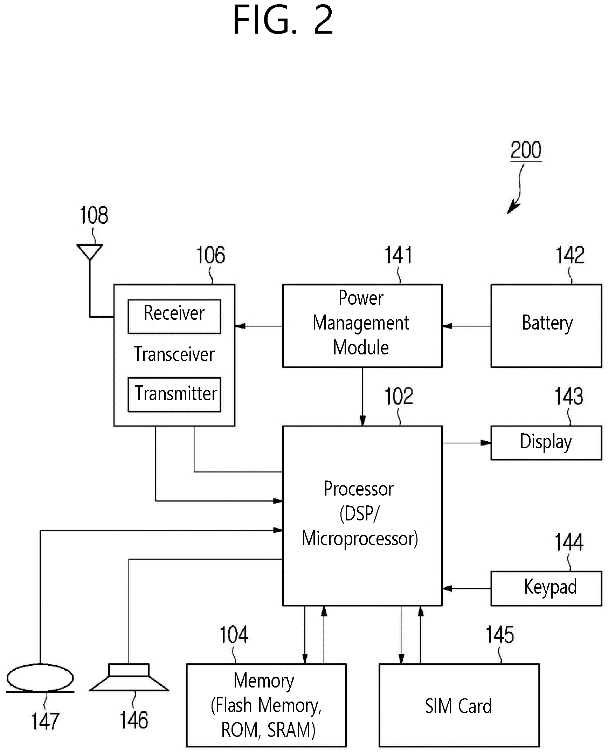

FIG. 2 illustrates an example of a UE applicable to the present disclosure.

Referring to FIG. 2, the UE 200 may include a processor 202, memory 204, transceiver 206, one or more antennas 208, power management module 241, battery 242, display 243, keypad 244, Subscriber Identification Module (SIM) card 245, speaker 246, and microphone 247.

The processor 202 may be configured to implement the descriptions, functions, procedures, proposals, methods and/or operational flowcharts disclosed herein. The processor 202 may be configured to control one or more other components of the UE 200 to implement the descriptions, functions, procedures, proposals, methods and/or operational flowcharts disclosed herein. Layers of wireless interface protocol may be implemented in the processor 202. The processor 202 may include ASIC, other chipset, logic circuit and/or data processing device. The processor 202 may be an application processor. The processor 202 may include at least one of DSP, Central Processing Unit (CPU), Graphics Processing Unit (GPU), and modem (modulator and demodulator).

The memory 204 is operably coupled with the processor 202 and may store various information for operating the processor 202. The memory 204 may include ROM, RAM, flash memory, memory card, storage medium and/or other storage device. When implementation is implemented in software, the techniques described herein may be implemented using modules (e.g., procedures, functions, etc.) that perform the descriptions, functions, procedures, proposals, methods and/or operational flowcharts disclosed herein. The modules may be stored in memory 204 and executed by the processor 202. The memory 204 may be implemented within the processor 202 or external to the processor 202, in which case it may be communicatively coupled with the processor 202 through various methods known in the art.

The transceiver 206 is operably coupled with the processor 202 and may transmit and/or receive wireless signals. The transceiver 206 may include a transmitter and a receiver. The transceiver 206 may include baseband circuitry for processing radio frequency signals. The transceiver 206 may control one or more antennas 208 to transmit and/or receive wireless signals.

The power management module 241 may manage power for the processor 202 and/or transceiver 206. The battery 242 may supply power to the power management module 241.

The display 243 may output results processed by the processor 202. The keypad 244 may receive input for use by the processor 202. The keypad 244 may be displayed on the display 243.

The SIM card 245 is an integrated circuit for securely storing International Mobile Subscriber Identity (IMSI) and related keys, and may be used to identify and authenticate subscribers in mobile phone devices such as mobile phones or computers. Also, contact information may be stored in many SIM cards.

The speaker 246 may output sound-related results processed by the processor 202. The microphone 247 may receive sound-related input for use by the processor 202.

In implementation of this specification, the UE may operate as a transmitting device in uplink and as a receiving device in downlink. In implementation of this specification, the base station may operate as a receiving device in UL and as a transmitting device in DL. In this specification, the base station may be called Node B, eNode B (eNB), gNB, and may not be limited to a specific form.

Also, for example, the UE may be implemented in various forms according to use cases/services. The UE may be configured by various components, devices/parts and/or modules. For example, each UE may include a communication device, control device, memory device, and additional components. The communication device may include communication circuitry and a transceiver. For example, the communication circuitry may include one or more processors and/or one or more memories. For example, the transceiver may include one or more transceivers and/or one or more antennas. The control device is electrically connected to the communication device, memory device, and additional components, and may control the overall operation of each UE. For example, the control device may control the electrical/mechanical operation of each UE based on programs/codes/instructions/information stored in the memory device. The control device may transmit information stored in the memory device to the outside (e.g., other communication devices) through the communication device via wireless/wired interface, or store information received from the outside (e.g., other communication devices) through the communication device via wireless/wired interface in the memory device.

The additional components may be configured variously according to the type of UE. For example, the additional components may include at least one of power device/battery, input/output (I/O) device (e.g., audio I/O port, video I/O port), driving device, and computing device. Also, the UE may be implemented in the form of, but not limited to, robot (100a in FIG. 1), vehicle (100b-1 and 100b-2 in FIG. 1), XR device (100c in FIG. 1), portable device (100d in FIG. 1), home appliance (100e in FIG. 1), IoT device (100f in FIG. 1), digital broadcasting terminal, hologram device, public safety device, MTC device, medical device, fintech device (or financial device), security device, climate/environment device, AI server/device (100g in FIG. 1), base station (120 in FIG. 1), network node. The UE may be used in mobile or fixed locations according to use cases/services.

All of the various components, devices/parts and/or modules of the UE may be connected to each other through wired interface, or at least some may be wirelessly connected through the communication device. Also, each component, device part and/or module of the UE may further include one or more elements. For example, the control device may be configured by one or more processor sets. For example, the control device may be configured by a set of communication control processor, Application Processor (AP), Electronic Control Unit (ECU), graphics processing unit, and memory control processor. As another example, the memory device may be configured by RAM, Dynamic RAM (DRAM), ROM, flash memory, volatile memory, non-volatile memory and/or combinations thereof.

### 5G System Architecture Applicable to the Present Disclosure

The 5G system is an advanced technology from 4th generation LTE mobile communication technology that supports new Radio Access Technology (RAT), extended LTE (eLTE) as an extended technology of Long Term Evolution (LTE), non-3GPP (e.g., WLAN) access, etc., through evolution or clean-state structure of existing mobile communication network structure.

The 5G system is defined service-based, and interactions between Network Functions (NFs) within the architecture for the 5G system can be represented in two ways as follows:
- Reference point representation: Represents interactions between NF services within NFs described by point-to-point reference points (e.g., N11) between two NFs (e.g., AMF and SMF).
- Service-based representation: Network functions (e.g., AMF) within the Control Plane (CP) allow other authorized network functions to access their services. This representation also includes point-to-point reference points when necessary.

5G Core (5GC) may include various components, among which access and mobility management function (AMF), session management function (SMF), policy control function (PCF), user plane function (UPF), application function (AF), unified data management (UDM), and non-3GPP interworking function (N3IWF) are included.

The UE is connected to a data network through UPF via next generation radio access network (NG-RAN) including gNB. The UE may receive data service through untrusted non-3GPP access, such as wireless local area network (WLAN). To connect non-3GPP access to the core network, N3IWF may be deployed.

N3IWF performs the function of managing interworking between non-3GPP access and the 5G system. When the UE is connected to non-3GPP access (e.g., WiFi referred to as IEEE 802.11), the UE may be connected to the 5G system through N3IWF. N3IWF performs control signaling with AMF and is connected to UPF through N3 interface for data transmission.

AMF may manage access and mobility in the 5G system. AMF may perform the function of managing non-access stratum (NAS) security. AMF may perform the function of handling mobility in idle state.

UPF performs the function of a gateway for transmitting and receiving user data. The UPF node may perform all or part of the user plane functions of serving gateway (S-GW) and packet data network gateway (P-GW) of 4th generation mobile communication.

UPF operates as a boundary point between next generation RAN (NG-RAN) and core network, and is an element that maintains data path between gNB and SMF. Also, when the UE moves across an area served by gNB, UPF performs the role of mobility anchor point. UPF may perform the function of handling PDU. For mobility within NG-RAN (e.g., NG-RAN defined after 3GPP Release-15), UPF may route packets. Also, UPF may function as an anchor point for mobility with other 3GPP networks (e.g., RAN defined before 3GPP Release-15), for example, UMTS (universal mobile telecommunications system) terrestrial radio access network (UTRAN), evolved-UTRAN (E-UTRAN), or GSM (global system for mobile communication)/EDGE (enhanced data rates for global evolution) radio access network (GERAN). UPF may correspond to a termination point of data interface toward data network.

PCF is a node that controls operator policy. AF is a server for providing various services to the UE. UDM is a server that manages subscriber information, like home subscriber server (HSS) of 4th generation mobile communication. UDM 460 stores and manages subscriber information in unified data repository (UDR).

SMF may perform the function of allocating Internet protocol (IP) address of the UE. And SMF may control protocol data unit (PDU) session.

For convenience of description below, reference numerals for AMF, SMF, PCF, UPF, AF, UDM, N3IWF, gNB, or UE may be omitted, and may operate with reference to matters described in standard documents published before this document.

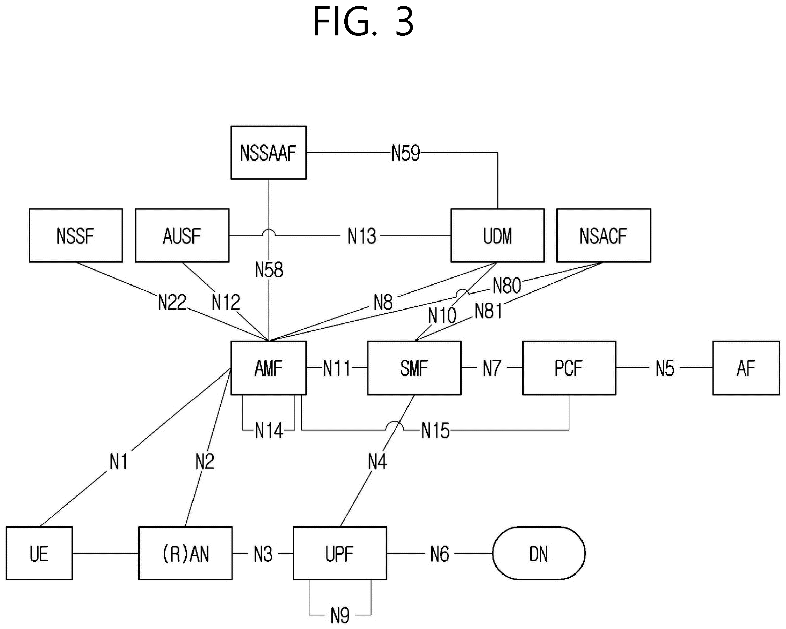

FIG. 3 illustrates an example of functional separation between NG-RAN and 5th generation core (5GC) applicable to the present disclosure.

Referring to FIG. 3, the UE is connected to a data network (DN) through next generation RAN. The control plane function (CPF) node performs all or part of the functions of mobility management entity (MME) of 4th generation mobile communication, and all or part of the control plane functions of serving gateway (S-GW) and PDN gateway (P-GW). The CPF node includes AMF and SMF.

The UPF node performs the function of a gateway through which user data is transmitted and received.

Authentication server function (AUSF) authenticates and manages the UE. Network Slice Selection Function (NSSF) is a node for network slicing as described below.

Network exposure function (NEF) provides a mechanism to securely expose services and functions of 5G core.

The reference points shown in FIG. 3 are as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in non-roaming scenario, and a reference point between AMF and PCF of visited network in roaming scenario. N16 represents a reference point between SMFs. N22 represents a reference point between AMF and NSSF. N30 represents a reference point between PCF and NEF. N33 may represent a reference point between AF and NEF, and the above-mentioned entities and interfaces may be configured with reference to matters described in standard documents published before this document. N58 represents a reference point between AMF and NSSAAF. N59 represents a reference point between UDM and NSSAAF. N80 represents a reference point between AMF and NSACF. N81 represents a reference point between SMF and NSACF.

The wireless interface protocol is based on 3GPP radio access network specifications. The wireless interface protocol consists horizontally of physical layer, data link layer, and network layer, and is vertically divided into user plane for data information transmission and control plane for control signal (signaling) transmission.

Protocol layers can be divided into L1 (layer-1), L2 (layer-2), and L3 (layer-3) based on the lower three layers of the open system interconnection (OSI) reference model widely known in communication systems.

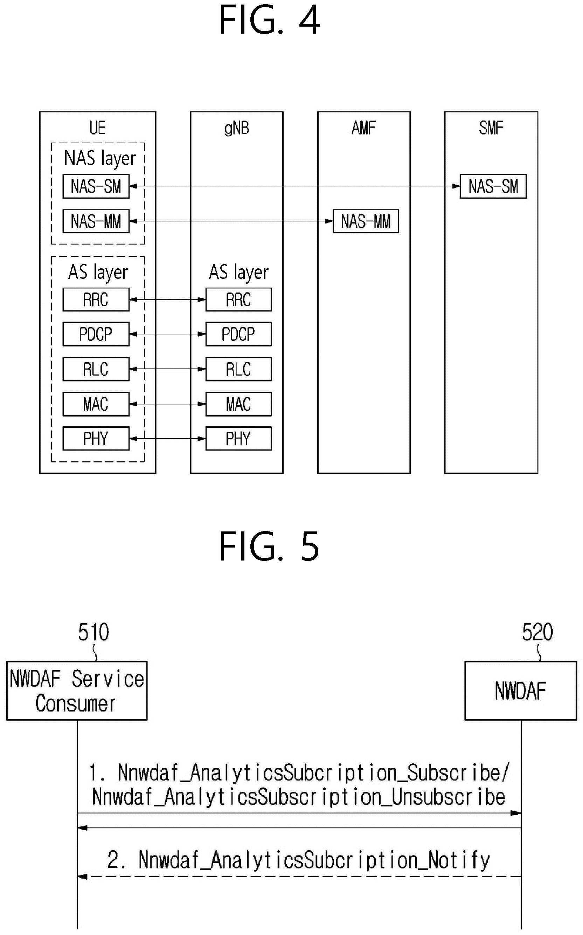

Hereinafter, the present disclosure describes each layer of wireless protocol. FIG. 4 illustrates an example of general architecture of a 5th generation (5G) system applicable to the present disclosure.

Referring to FIG. 4, the access stratum (AS) layer may include physical (PHY) layer, medium access control layer, radio link control (RLC) layer, packet data convergence protocol (PDCP) layer, and radio resource control (RRC) layer, and operations based on each layer may operate with reference to matters described in standard documents published before this document.

Referring to 3GPP TR 23.700-41, various methods for addressing problems associated with a network slice architecture are being studied. [Table 1] shows the research scope that the present disclosure focuses on among various scopes to be studied for network slice enhancement.

**[Table 1]**

| | |
|---|---|
| 1 Scope | |
| The Technical Report studies the gaps and performs evaluations of potential architecture enhancements to support Network Slicing with the following objectives: | |
| | 4. Study whether and how to enhance the system to ensure network controlled behaviour of network slice usage including UE registration and PDU Session establishment (e.g. so that when performing NSAC the network slice can serve UEs/PDU Sessions with actual activity). |

Key issues related to the scope shown in [Table 1] and solutions thereto have been discussed. In particular, key issue #6 (KI#6) relates to enhanced network control of UE operation, and as a solution thereto, a method of using an inactivity timer for a network slice established on-demand has been proposed. For example, when there is no PDU session using a network slice established on-demand, a method of deregistering from the corresponding network slice using an inactivity timer has been proposed. In this case, an inactivity timer is configured per S-NSSAI and is run at both the UE and the AMF. In addition, a timer is provided by an HPLMN or VPLMN during a registration procedure along with a configured NSSAI. In the present disclosure, an inactivity timer refers to an inactivity timer for network slice deregistration, and may be referred to as a slice deregistration inactivity timer or a network slice deregistration inactivity timer.

Referring to 3GPP TS 23.501, a method of controlling the use of a network slice using an inactivity timer is defined. [Table 2] below shows a network slice usage control method excerpted from 3GPP TS 23.501.

**[Table 2]**

| | |
|---|---|
| 5.15.15 Support of Network Slice usage control | |
| 5.15.15.1 General | |
| Network Slice usage control is achieved as follows: | |
| | 1) Configuring network-controlled Slice Usage Policy to supporting UEs (see clause 5.15.15.2). |
| | 2) Configuring PDU Sessions inactivity timers, and Network Slice deregistration inactivity timers (see clause 5.15.15.3). |
| | NOTE: Roaming is not supported in this Release of the specification. |
| ... | |
| 5.15.15.3 Network-based per UE Network Slice usage behaviour control | |
| The 5GC performs Network Slice usage monitoring to be able to enforce the release of inactive PDU Sessions, and deregistering of UEs from Network Slices with no PDU Sessions on them according to its own policies. In order to support usage monitoring for a Network Slice: | |
| | - the AMF runs a slice deregistration inactivity timer per S-NSSAI and access type to deregister the Network Slice which is started when the Network Slice is not used by any PDU Session over the corresponding access type. The slice deregistration inactivity timer is stopped and reset when at least a PDU Session associated with the Network Slice is successfully established or the Network Slice is removed form the Allowed NSSAI. When the slice deregistration inactivity timer for a Network Slice over an access type expires, the AMF removes the Network Slice from the Allowed NSSAI over the access type by sending the UE Configuration Update Command to impacted UE(s). |
| | - the SMFs provide to UPFs that handle the PDU sessions in the Network Slice a PDU Session inactivity timer. The PDU Session inactivity timer is started after no data packet is transmitted or received and runs until the next data packet is transmitted or received which restarts the timer again. If the PDU Session inactivity timer expires before any packet is received or transmitted, the UPF reports this PDU Session inactivity event to the SMF to cause the SMF to release the PDU Session. While releasing the PDU session the SMF may indicate the release cause because of slice inactivity. When the AMF receives the notification of PDU Session release and it includes the release cause of slice inactivity and if the Network Slice of the released PDU Session is not used by other PDU Sessions (i.e. the last PDU Session using the Network Slice is released) over the corresponding access type, the AMF may trigger the UE Configuration Update procedure to remove the Network Slice from the Allowed NSSAI over that corresponding access type or start slice deregistration inactivity timer for the Network Slice. |
| If an S-NSSAI is dedicated for a single AF, and if authorized by operator policy to provide deregistration inactivity/PDU Session inactivity timer values for the S-NSSAI, the AF uses external parameter provisioning procedure to provide deregistration inactivity and PDU session inactivity timer values as described in clause 4.15.6.2 of TS 23.502 [3]. In this case, the AF provided timer values are stored in the UDM and provided to the AMF/SMF as part of subscription data for the corresponding S-NSSAI. | |
| If no AF is authorized to provide deregistration inactivity/PDU Session inactivity timer values for the S-NSSAI, the slice deregistration inactivity timer value and PDU Session inactivity timer value are either pre-configured in the AMF/SMF or received by the AMF/SMF during the AM Policy Association / SM Policy Association procedure respectively. | |
| To enable a serving network to direct UEs to a preferred Network Slice, the AMF may request the UE to transfer a PDU Session from one S-NSSAI to another S-NSSAI as described in clause 5.15.19. | |

Referring to [Table 2], when a network slice is not used in any PDU session, an AMF runs a slice deregistration inactivity timer per access type and per S-NSSAI to deregister the network slice. When one or more PDU sessions associated with a network slice are successfully established or an S-NSSAI for the network slice is removed from an allowed NSSAI, the slice deregistration inactivity timer is stopped and reset.

3GPP Core Network and Terminals 1 (CT1) is discussing the mobility management aspects of the network slice usage control function. According to CT1, to control network slice usage, an AMF maintains or manages a slice deregistration inactivity timer per on-demand S-NSSAI. In addition, to deregister a network slice, the AMF removes the corresponding S-NSSAI from an allowed NSSAI and notifies the UE of a new allowed NSSAI from which the corresponding S-NSSAI has been removed. The state of the slice deregistration inactivity timer and the on-demand S-NSSAI at the AMF side is always treated as the reference value regardless of the state of the slice deregistration inactivity timer and the on-demand S-NSSAI at the UE side. Here, an on-demand S-NSSAI refers to an S-NSSAI that allows a UE to register to a network. In other words, an on-demand S-NSSAI is an S-NSSAI used by a UE to establish a PDU session for user data transmission, and a UE registers to a network based on the corresponding on-demand S-NSSAI.

[Table 3] shows a mobility management-based network slice usage control method excerpted from 3GPP TS 24.501.

**[Table 3]**

| | |
|---|---|
| 4.6.2.9 Mobility management based network slice usage control | |
| If the UE and network support network slice usage control, the AMF monitors network slice usages by running a slice deregistration inactivity timer per S-NSSAI and access type in case it becomes the allowed S-NSSAI but has no associated PDU sessions for a certain time. The slice deregistration inactivity timer is: | |
| | a) started when the S-NSSAI is not used by any PDU session over the corresponding access type or when the S-NSSAI is not used by all of the user plane resources of the MA PDU session, and |
| | b) stopped and reset when at least a PDU session associated with the S-NSSAI is successfully established or a MA PDU session associated with the S-NSSAI is successfully established or the S-NSSAI is removed from the Allowed NSSAI. |
| Upon expiry of the slice deregistration inactivity timer, the AMF removes the S-NSSAI from the Allowed NSSAI over the access type by sending the CONFIGURATION UPDATE COMMAND message to the UE(s) with the new Allowed NSSAI if the UE supports network slice usage control. | |
| If the UE supports network slice usage control, the AMF provides on-demand NSSAI in the Configured NSSAI to the UE in the REGISTRATION ACCEPT message or in the UE Configuration Update Command message. The on-demand NSSAI consists of one or more configured S-NSSAIs. | |
| | NOTE: Network slice usage control feature is not supported in roaming scenarios. |
| | Editor's note [CR#5657, WID: eNS_Ph3]: The de-registration inactivity timer per network slice may not be included in the on-demand NSSAI depending on stage-2 requirement. |

Referring to [Table 3], when there is no associated PDU session for a certain period of time, an AMF runs a slice deregistration inactivity timer per S-NSSAI and per access type, and monitors network slice usage. In this case, when the slice deregistration inactivity timer expires, the AMF transmits a configuration update command message with an allowed NSSAI to the UE to remove the corresponding S-NSSAI from the allowed NSSAI of the UE.

3GPP TS 24.501 defines various functions of NWDAF. For example, NWDAF supports a data collection function from NF and AF, a data collection function from OAM, and an analytics information provisioning function for NF and AF. In addition, NWDAF supports various NF services. For example, NWDAF provides a Nnwdaf_AnalyticsSubscription service that allows an NF service consumer to subscribe to and/or unsubscribe from various types of analytics of NWDAF, or a Nnwdaf_AnalyticsInfo service that allows an NF service consumer to request various types of analytics information from NWDAF or allows NWDAF to request analytics context transfer to another NWDAF. [Table 4] is a definition of analytics subscription and/or unsubscription by an NWDAF service consumer excerpted from 3GPP TS 23.288, and FIG. 5 illustrates a network data analytics subscription and/or unsubscription procedure.

**[Table 4]**

| |
|---|
| 6.1.1.1 Analytics subscribe/unsubscribe by NWDAF service consumer |
| This procedure is used by any NWDAF service consumer (e.g. including NFs/OAM) to subscribe/unsubscribe at NWDAF to be notified on analytics information, using Nnwdaf_AnalyticsSubscription service defined in clause 7.2. This service is also used by an NWDAF service consumer to modify existing analytics subscription(s). Any entity can consume this service as defined in clause 7.2. |

Referring to [Table 4] and FIG. 5, an NWDAF service consumer (520) transmits a subscription and/or unsubscription message for a Nnwdaf_AnalyticsSubscription service to an NWDAF (520) to receive a notification on analytics information.

NWDAF analyzes network data related to a slice load level and provides slice load level information to a consumer NF. [Table 5] shows a network data analysis method related to a slice load level excerpted from 3GPP TS 23.288.

**[Table 5]**

| | | |
|---|---|---|
| 6.3 Slice load level related network data analytics | | |
| 6.3.1 General | | |
| The NWDAF provides slice load level information to a consumer NF on a Network Slice level or a Network Slice instance level or both. The NWDAF is not required to be aware of the current subscribers using the slice. The NWDAF notifies slice specific network status analytics information to the consumer NF that is subscribed to it. A consumer NF may collect directly slice specific network status analytics information from NWDAF. This information is not subscriber specific. | | |
| The NWDAF services as defined in the clause 7.2 and clause 7.3 are used to expose slice load level analytics from the NWDAF to the consumer NF (e.g. PCF, NSSF or AMF). | | |
| The consumer of these analytics shall indicate in the request or subscription: | | |
| | - Analytics ID = "Load level information"; | |
| | - Analytics Filter Information: | |
| | | - S-NSSAI and NSI ID; |
| | NOTE 1: The use of NSI ID in the network is optional and depends on the deployment choices of the operator. If used, the NSI ID is associated with S-NSSAI. NSI ID is only applicable when the consumer of analytics is NSSF or AMF. | |
| | | - optionally, the list of analytics subsets that are requested among those specified in clause 6.3.3A; |
| | | - optionally, for analytics exposure in roaming case (see clause 6.1.5), the PLMN ID identifying the target PLMN (i.e. PLMN of which the roaming analytics is requested); and |
| | | - optionally, for analytics exposure in roaming case (see clause 6.1.5), mapped S-NSSAI of the HPLMN if the consumer NF is in the VPLMN. |
| | NOTE 2: The terms "HPLMN" and "VPLMN" here refer to a roaming case in which at least one UE served by the NWDAF analytics consumer is involved. | |
| | - an optional Area of Interest; | |
| | - an optional list of NF types; | |
| | - optionally, Load Level Threshold value; | |
| | - optionally, "maximum number of objects" indicating the maximum number of Network Slice instances expected in output, when the Analytics Filter Information does not indicate an NSI ID; and | |
| | - an Analytics target period indicating the time period over which the statistics or predictions are requested. | |

To analyze network data related to a slice load level, NWDAF collects information as shown in [Table 6] and [Table 7]. [Table 6] shows data input from OAM for slice load analysis, and [Table 7] shows data input from a 5GC NF for slice load analysis.

**[Table 6]**

| **Information** | **Source** | **Description** |
|---|---|---|
| UE registered in a Network Slice/Network Slice instance | OAM | Mean number of UEs registered in a NW slice or NW slice instance as defined in TS 28.552 [8]. (NOTE 1). |
| PDU Session established on a Network Slice/Network Slice instance | OAM | Mean number of established PDU Sessions in a NW slice or NW slice instance as defined in TS 28.552 [8]. (NOTE 1). |
| Load of NFs associated to Network Slice instance | OAM | Resource utilization information of a Network Slice instance obtained from its constituent NF instances. NF instance load input data collection is described in clause 6.5, Table 6.5.2-1. |
| NOTE 1: 5GC performance measurements can be provided per S-NSSAI by OAM as defined in TS 28.552 [8]. Any 5GC performance measurements per NSI ID required further coordination with SA WG5. | | |

**[Table 7]**

| **Information** | **Source** | **Description** |
|---|---|---|
| Timestamps | 5GC NF | A time stamp associated with the collected information. |
| UE registers/de-registers to a Network Slice/Network Slice instance | AMF(s) | AMF reports that a UE registered or deregistered to a S-NSSAI or to a S-NSSAI and NSI ID. |
| Number of UEs served by the AMF | AMF(s) | AMF reports the total number of UEs served by the AMF per S-NSSAI or per S-NSSAI and NSI ID. (NOTE 1) |
| PDU Session established/released on a Network Slice | SMF(s) | SMF reports that a PDU Session is established or released per S-NSSAI or per S-NSSAI and NSI ID. |
| Current number of UEs registered in a NW slice | NSACF | NSACF reports the number of UE registered at the S-NSSAI. |
| Current number of PDU Sessions established in a NW slice | NSACF | NSACF reports the number of PDU Sessions established at the S-NSSAI. |
| Load of NFs associated to Network Slice instance | NRF | Resource utilization information of a Network Slice instance obtained from its constituent NF instances. NF instance load input data collection is described in clause 6.5, Table 6.5.2-1. |
| NOTE 1: AMF reports the total number of registered UE in the AMF at each associated time stamp. | | |
| NOTE 2: SMF reports multiple PDU Sessions when establishment or release happened at the same time, indicated by the time stamp. | | |
| NOTE 3: Based on the internal logic, the NWDAF determines the source for the data collection. | | |

NWDAF obtains and provides analytics information related to network load based on information collected as described above. For example, NWDAF provides analytics information related to network load as shown in [Table 8] through [Table 11].

[Table 8] shows network slice instance load statistics information of NWDAF.

**[Table 8]**

| **Information** | **Description** |
|---|---|
| S-NSSAI | Identification of the Network Slice. |
| Network Slice instances (1..max) | List of Network Slice instance(s) within the S-NSSAI. |
| > NSI ID | Identification of the Network Slice instance. |
| > Number of UE Registrations (NOTE 1) | Number of UE registrations of the Network Slice instance (average, variance). |
| > Number of PDU Sessions establishment (NOTE 1) | Number of PDU Session establishments of the Network Slice instance (average, variance). |
| > Resource usage (NOTE 1) | The usage of assigned virtual resources currently in use for the NF instances (mean usage of virtual CPU, memory, disk) as defined in clause 5.7 of TS 28.552 [8], belonging to a particular Network Slice instance. |
| > Resource usage threshold crossings (NOTE 1) | Number of times resource usage threshold is met or exceeded or crossed on the Network Slice instance and the time when it happened. It is present if threshold is provided by the consumer as Analytics Filter. |
| > Resource usage threshold crossings time period (1..max) (NOTE 1, NOTE 2) | Resource usage threshold crossing vector including time elapsed between times each threshold is met or exceeded or crossed on the Network Slice instance if a threshold value is provided by the consumer as Analytics Filter. |
| > Load Level (NOTE 1) | The load level of the Network Slice Instance indicated by the S-NSSAI and the associated NSI ID (if applicable) in the Analytics Filter, it is present if Load Level Threshold is not provided by the consumer as Analytics Filter. |
| > Crossed Load Level Threshold (NOTE 1) | An indication on whether the Load Level Threshold is met or exceeded by the statistics value of the Load Level. It is present if the Load Level Threshold is provided by the consumer as Analytics Filter. |
| NOTE 1: Analytics subset that can be used in "list of analytics subsets that are requested". | |
| NOTE 2: The time period is a time interval specified by a start time and an end time timestamps within the Analytics target period. | |

[Table 9] shows network slice load statistics information.

**[Table 9]**

| **Information** | **Description** |
|---|---|
| S-NSSAI | Identification of the Network Slice. |
| > Number of UE Registrations (NOTE 1) | Number of UE registrations at the Network Slice (average, variance). |
| > Number of PDU sessions establishments (NOTE 1) | Number of PDU Session establishments at the Network Slice (average, variance). |
| > Load Level (NOTE 1) | The load level of the Network Slice Instance indicated by the S-NSSAI and the associated NSI ID (if applicable) in the Analytics Filter, it is present if Load Level Threshold is not provided by the consumer as Analytics Filter. |
| > Crossed Load Level Threshold (NOTE 1) | An indication on whether the Load Level Threshold is met or exceeded by the statistics value of the Load Level. It is present if the Load Level Threshold is provided by the consumer as Analytics Filter. |
| NOTE 1: Analytics subset that can be used in "list of analytics subsets that are requested". | |

[Table 10] shows network slice instance load prediction information.

**[Table 10]**

| **Information** | **Description** |
|---|---|
| S-NSSAI | Identification of the Network Slice. |
| Network Slice instances (1..max) | List of Network Slice instance(s) within the S-NSSAI. |
| > NSI ID | Identification of the Network Slice instance. |
| > Number of UE Registrations (NOTE 1) | Number of predicted UE registrations at the Network Slice instance (average, variance). |
| > Number of PDU Sessions establishment (NOTE 1) | Number of predicted PDU Session establishments of the Network Slice instance (average, variance). |
| > Resource usage (NOTE 1) | The predicted usage of assigned virtual resources for the NF instances (mean usage of virtual CPU, memory, disk) as defined in clause 5.7 of TS 28.552 [8], belonging to a particular Network Slice instance. |
| > Resource usage threshold crossings (NOTE 1) | Number of predicted times resource usage threshold is met or exceeded or crossed at the Network Slice instance and the time when it happened. It is present if a threshold value is provided by the consumer as Analytics Filter. |
| > Resource usage threshold crossings time period (1..max) (NOTE 1, NOTE 2) | Predicted Resource usage threshold vector including predicted time elapsed between times each threshold is met or exceeded or crossed on the Network Slice instance, it is present if a threshold value is provided by the consumer as Analytics Filter. |
| > Load Level (NOTE 1) | The load level of the Network Slice Instance indicated by the S-NSSAI and the associated NSI ID (if applicable) in the Analytics Filter, if Load Level Threshold is not provided by the consumer as Analytics Filter. |
| > Crossed Load Level Threshold (NOTE 1) | An indication on whether the Load Level Threshold is met or exceeded by the predicted value of the Load Level. It is present if the Load Level Threshold is provided by the consumer as Analytics Filter. |
| > Confidence | Confidence of this prediction. |
| NOTE 1: Analytics subset that can be used in "list of analytics subsets that are requested". | |
| NOTE 2: The time period is a time interval specified by a start time and an end time timestamps within the Analytics target period. | |

[Table 11] shows network slice load prediction information.

**[Table 11]**

| **Information** | **Description** |
|---|---|
| S-NSSAI | Identification of the Network Slice. |
| > Number of UE Registrations (NOTE 1) | Predicted Number of UE registrations at the Network Slice (average, variance). |
| > Number of PDU sessions establishments (NOTE 1) | Predicted Number of PDU Session establishments at the Network Slice (average, variance). |
| > Load Level (NOTE 1) | The load level of the Network Slice Instance indicated by the S-NSSAI and the associated NSI ID (if applicable) in the Analytics Filter, if Load Level Threshold is not provided by the consumer as Analytics Filter. |
| > Crossed Load Level Threshold (NOTE 1) | An indication of whether the Load Level Threshold is met or exceeded by the predicted value of the Load Level. It is present if the Load Level Threshold is provided by the consumer as Analytics Filter. |
| > Confidence | Confidence of this prediction. |
| NOTE 1: Analytics subset that can be used in "list of analytics subsets that are requested". | |

### Specific Embodiments of the Present Disclosure

The present disclosure relates to configuring a slice deregistration inactivity timer in a wireless communication system. Specifically, the present disclosure relates to an apparatus and method for adjusting a slice deregistration inactivity timer value based on information periodically exchanged between an Access and Mobility Management Function (AMF) and an NWDAF. In the present disclosure, an AMF is a network node that performs AMF functions and includes an AMF node or an AMF entity, and an NWDAF is a network node that performs NWDAF functions and includes an NWDAF node or an NWDAF entity.

Currently, 3GPP System Aspects 2/Core Network and Terminals 1 (SA2/CT1) Working Group (WG) has defined, in Enhancement of Network Slicing Phase 3 (eNS_Ph3), an S-NSSAI that performs slice registration only when a UE actually uses a slice while running an application as an on-demand Single Network Slice Selection Assistance Information (on-demand S-NSSAI). In addition, 3GPP SA2/CT1 WG has defined a slice deregistration inactivity timer to effectively use an on-demand S-NSSAI, and a method of preventing resources from being unnecessarily used by deregistering a slice for an on-demand S-NSSAI allocated to or associated with a PDU session(s) in which user data traffic no longer occurs is being studied. In particular, for running a slice deregistration inactivity timer, a method of running, starting, or operating a slice deregistration inactivity timer at each of a UE and a network by transmitting a value of the slice deregistration inactivity timer to the UE after the network determines whether to use the slice deregistration inactivity timer is being discussed.

A network uses a slice deregistration inactivity timer to control a corresponding S-NSSAI to be used only when a UE actually uses the S-NSSAI.

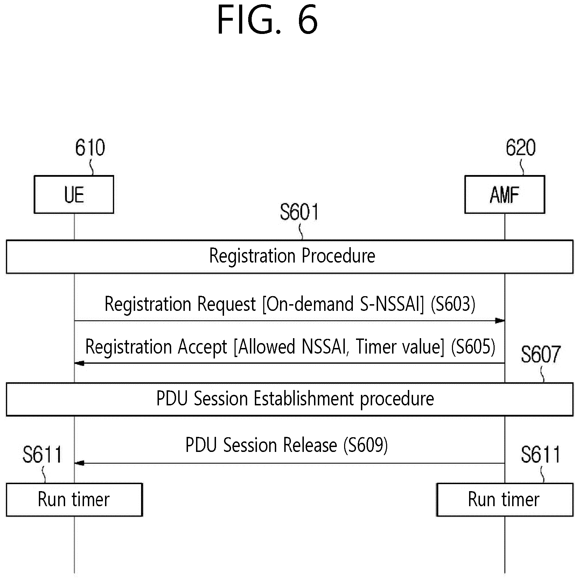

FIG. 6 illustrates an example of a slice deregistration inactivity timer running procedure. Referring to FIG. 6, in step S601, a UE (610) and an AMF (620) perform a registration procedure for initial registration of the UE. Thereafter, in step S603, the UE (610) transmits a registration request message including an on-demand S-NSSAI to the AMF (620). In step S605, the AMF (620) transmits to the UE (610) an allowed NSSAI and a timer value. Here, the timer value includes a slice deregistration inactivity timer value, and is configured for the on-demand S-NSSAI based on information received from a PCF or UDM and local information such as network load. Accordingly, each of the AMF (620) and the UE (610) may store a value of the slice deregistration inactivity timer for the on-demand S-NSSAI. In step S607, the AMF (620) and the UE (610) perform a PDU session establishment procedure. Thereafter, in step S609, the AMF (630) transmits a PDU session release message to the UE. In step S611, each of the AMF (620) and the UE (610) runs the slice deregistration inactivity timer for the on-demand S-NSSAI when there is no PDU session using the corresponding on-demand S-NSSAI. Thereafter, when the slice deregistration inactivity timer expires, each of the AMF (620) and the UE (610) deletes or removes the corresponding on-demand S-NSSAI from the allowed NSSAI.

However, a time point at which the slice deregistration inactivity timer for the on-demand S-NSSAI expires at the AMF and a time point at which the slice deregistration inactivity timer for the on-demand S-NSSAI expires at the UE may not coincide. In this case, since a time point at which the corresponding on-demand S-NSSAI is deleted from the allowed NSSAI stored in each of the network and the UE differs, unnecessary signaling may occur between the UE and the network. For example, when the slice deregistration inactivity timer of the network expires before the slice deregistration inactivity timer of the UE, the network deletes the corresponding on-demand S-NSSAI from the allowed NSSAI stored in the network and stops service for the corresponding S-NSSAI. At this time, the slice deregistration inactivity timer of the UE has not yet expired, and the corresponding on-demand S-NSSAI may still be included in the allowed NSSAI stored in the UE. In this case, the UE may request establishment of a PDU session for the corresponding S-NSSAI. However, since the network has stopped service for the corresponding S-NSSAI, the network rejects the request of the UE.

As described above, when a time point at which the slice deregistration inactivity timer of the network for the on-demand S-NSSAI expires and a time point at which the slice deregistration inactivity timer of the UE expires do not coincide, unnecessary signaling occurs between the UE and the network, and therefore the slice deregistration inactivity timer needs to be precisely configured to prevent this.

Therefore, the present disclosure proposes a method of more accurately configuring a slice deregistration inactivity timer using an NWDAF that monitors network load, AMF load, and usage failure reports between a network and a UE, etc. Here, network load refers to load information generated between a UE and a network, and AMF load refers to load information generated at an AMF. In addition, a usage failure report is information reported from an AMF to an NWDAF when a UE requests use of an NSSAI that has already been deleted from the AMF among allowed NSSAIs.

The NWDAF is a network technology introduced into the 5G service-based architecture to support intelligent and autonomous network operation and service management in 3GPP. The NWDAF includes a network node or network entity that collects data from various modules of a 5G system (e.g., NF, AF, UDR, etc.) and makes decisions on network operation and management actions based on the collected data. For example, the NWDAF performs various functions such as calculation and prediction of load levels for network slices, analysis and prediction for specific network functions, calculation of network load performance, and prediction of future load. Since a data format for transmitting data related to S-NSSAI at an AMF and/or NWDAF is not currently defined, and since an AMF and/or NWDAF does not separately collect information on signaling between a network and a UE, the information currently collected alone is not suitable for configuring a slice deregistration inactivity timer for an on-demand S-NSSAI.

Therefore, the present disclosure proposes a method in which an AMF receives network load, usage failure report information, and AMF load information for an on-demand S-NSSAI from an NWDAF, and precisely configures or adjusts a value of a slice deregistration inactivity timer based on the received information.

An NWDAF receives information on network load, AMF load, and usage failure reports from an AMF, and derives or predicts at least one of network load, AMF load, and a number of usage failure reports for an S-NSSAI using empirical values based on statistics of the received information. The NWDAF transmits, to the AMF, analytics data including at least one of network load, AMF load, and a number of usage failure reports for an S-NSSAI derived or predicted over a specific time period. Such interaction between an AMF and an NWDAF is performed periodically.

An AMF configures a slice deregistration inactivity timer value of a corresponding UE based on analytics data received from an NWDAF, and transmits the slice deregistration inactivity timer value of the UE to the UE using a registration accept message or a UE configuration update command message. In other words, the AMF updates the slice deregistration inactivity timer value of the AMF and the UE based on information updated through periodic interaction with the NWDAF, i.e., analytics data. When the slice deregistration inactivity timer value of the UE is updated, the AMF transmits a registration accept message or a UE configuration update command message including the updated slice deregistration inactivity timer value to the UE. Through this, the UE may receive, store, and configure the updated slice deregistration inactivity timer value.

When a PDU session release event for a UE occurs, an AMF transmits a PDU session release message to the UE. When the last PDU session associated with an on-demand S-NSSAI is released, the AMF runs, starts, or operates the configured slice deregistration inactivity timer of the AMF. In addition, when a PDU session release message for the last PDU session associated with the on-demand S-NSSAI is received from the AMF, the UE runs, starts, or operates the configured slice deregistration inactivity timer of the UE.

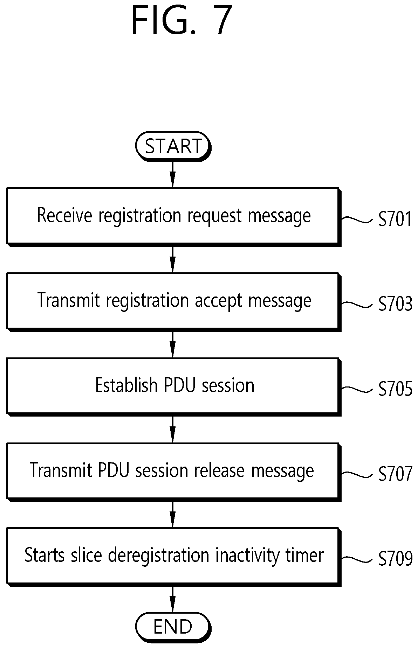

FIG. 7 illustrates an example of a slice deregistration inactivity timer running procedure of an AMF according to an embodiment of the present disclosure. FIG. 7 illustrates a method performed by a network node. The network node includes an AMF.

Referring to FIG. 7, in step S701, a network node receives a registration request message. In other words, the network node receives a registration request message including an on-demand S-NSSAI from a UE. According to an embodiment, the registration request message may further comprise capability information of the UE. When the registration request message is received, the network node may perform an operation for registration of the UE.

In step S703, the network node transmits a registration accept message. In other words, the network node transmits a registration accept message to the UE in response to the registration request message of the UE. The registration accept message comprises an allowed NSSAI and a timer value. Here, the allowed NSSAI comprises the on-demand S-NSSAI included in the registration request message, and the timer value comprises a slice deregistration inactivity timer value for the on-demand S-NSSAI. The slice deregistration inactivity timer value for the on-demand S-NSSAI may be determined based on information received from a PCF and UDM or information obtained from the NWDAF. The information obtained from the NWDAF may comprise at least one of network load, AMF load, and a number of usage failure reports for the S-NSSAI.

In step S705, the network node establishes a PDU session. In other words, the network node may establish a PDU session between the network node and the UE by receiving a PDU session establishment request message from the UE and transmitting a PDU session establishment accept message to the UE. In this case, the PDU session may be a session using the on-demand S-NSSAI.

In step S707, the network node transmits a PDU session release message. When a PDU session termination event occurs, the network node transmits a PDU session release message for PDU session termination to the UE.

In step S709, the network node starts a slice deregistration inactivity timer. That is, the network node starts a slice deregistration inactivity timer related to a slice for the UE. The slice deregistration inactivity timer related to the slice for the UE may be referred to as a slice deregistration inactivity timer for the on-demand S-NSSAI. The value of the slice deregistration inactivity timer for the on-demand S-NSSAI may be determined based on information received from a PCF and UDM or information obtained from the NWDAF. For example, the AMF may obtain analytics data including at least one of network load, AMF load, and a number of usage failure reports for the on-demand S-NSSAI through periodic interaction with NWDAF, and may configure or update a value of the slice deregistration inactivity timer for the corresponding on-demand S-NSSAI based on the obtained analytics data. After transmitting the PDU session release message, when no PDU session for the S-NSSAI exists any longer, the network node runs the slice deregistration inactivity timer. Thereafter, when the slice deregistration inactivity timer for the on-demand S-NSSAI expires, the network node locally deletes the on-demand S-NSSAI from the allowed NSSAI list.

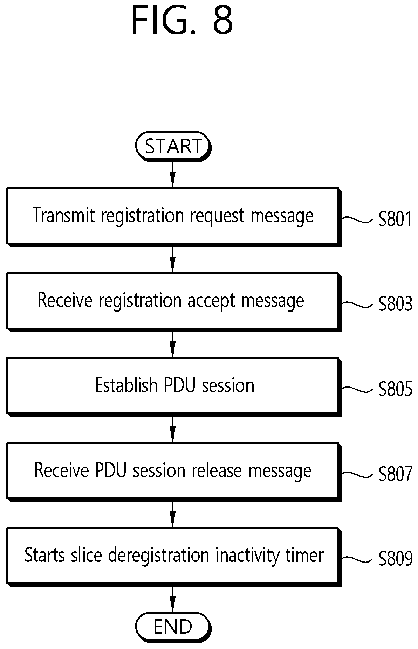

FIG. 8 illustrates an example of a slice deregistration inactivity timer running procedure of a UE according to an embodiment of the present disclosure. FIG. 8 illustrates a method performed by a UE.

Referring to FIG. 8, in step S801, a UE transmits a registration request message. In other words, the UE transmits a registration request message comprising an on-demand S-NSSAI to a network node. According to an embodiment, the registration request message may further comprise capability information of the UE.

In step S803, the UE receives a registration accept message from the network node. In other words, the UE receives a registration accept message from the network node in response to the registration request message. The registration accept message comprises an allowed NSSAI and a timer value. Here, the allowed NSSAI comprises the on-demand S-NSSAI included in the registration request message, and the timer value comprises a slice deregistration inactivity timer value for the on-demand S-NSSAI. The slice deregistration inactivity timer value for the on-demand S-NSSAI may be a value received by the AMF from a PCF and UDM, or a value determined by the AMF based on information obtained from NWDAF.

In step S805, the UE establishes a PDU session. A PDU session between the UE and the network node may be established by the UE transmitting a PDU session establishment request message to the network node and the network node transmitting a PDU session establishment accept message to the UE.

In step S807, the UE receives a PDU session release message. That is, the UE receives a PDU session release message for PDU session termination from the network node.

In step S809, the UE starts a slice deregistration inactivity timer. In other words, when a PDU session release message is received, the UE may run a slice deregistration inactivity timer for the on-demand S-NSSAI. A value of the slice deregistration inactivity timer for the on-demand S-NSSAI may be received via a registration accept message or a UE configuration update command message. When the slice deregistration inactivity timer for the on-demand S-NSSAI expires, the UE locally deletes the on-demand S-NSSAI from the allowed NSSAI list.

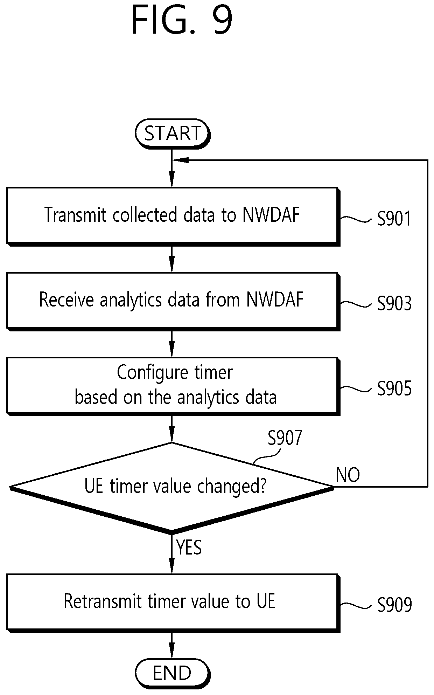

FIG. 9 illustrates an example of a slice deregistration inactivity timer configuration procedure according to an embodiment of the present disclosure. FIG. 9 illustrates a method performed by an AMF.

Referring to FIG. 9, in step S901, an AMF transmits collected data to an NWDAF. In other words, the AMF collects data required to analyze network data related to a load of an on-demand S-NSSAI for a certain period of time, and transmits the collected data to the NWDAF. For example, the AMF may collect data required to analyze network data related to a load of an on-demand S-NSSAI by measuring, calculating, or collecting at least one of information on a UE using the on-demand S-NSSAI, network load, AMF load, a number of UEs being processed by the AMF, a number of UEs using the on-demand S-NSSAI, a number of usage requests per UE for the on-demand S-NSSAI, and a number of usage requests per on-demand S-NSSAI. The collected data may be referred to as input data required to analyze network data related to a load of the on-demand S-NSSAI.

In step S903, the AMF receives analytics data from the NWDAF. The AMF receives, from the NWDAF, analytics data indicating a result of analyzing network data related to a load of the on-demand S-NSSAI. The analytics data may comprise at least one of network load, AMF load, and a number of usage failure reports for the on-demand S-NSSAI.

In step S905, the AMF configures a timer based on the analytics data. In other words, the AMF configures a slice deregistration inactivity timer value for the on-demand S-NSSAI based on the analytics data received from the NWDAF. According to an embodiment, the AMF may maintain or update a slice deregistration inactivity timer value of the UE for the on-demand S-NSSAI based on at least one of network load and a number of usage failure reports included in the analytics data. According to an embodiment, the AMF may maintain or update a slice deregistration inactivity timer value of the AMF for the on-demand S-NSSAI based on an AMF load included in the analytics data.

In step S907, the AMF checks whether a timer value of the UE has been changed. The AMF checks whether a slice deregistration inactivity timer value of the UE for the on-demand S-NSSAI has been changed as a result of configuring the timer in step S905.

When the timer value of the UE has been changed, in step S909, the AMF retransmits the timer value to the UE. When the slice deregistration inactivity timer value of the UE for the on-demand S-NSSAI has been changed, the AMF may transmit the changed slice deregistration inactivity timer value for the on-demand S-NSSAI to the UE using a registration accept message or a UE configuration update command message.

As described with reference to FIG. 9, the AMF transmits input data required to analyze network data related to a load of the on-demand S-NSSAI to the NWDAF, and the NWDAF transmits analytics data, which is a result of analyzing and outputting network data related to the load of the on-demand S-NSSAI, to the AMF. Here, the input data may comprise information obtainable through reception, measurement, or calculation at the AMF over a certain period of time. For example, the input data may comprise information that enables measurement and analysis of network load and AMF load at the NWDAF, information that enables derivation of statistics on failed reports between a UE and an AMF at the NWDAF, and information on a number of usage failure reports per on-demand S-NSSAI. In addition, the output data may comprise information obtainable through statistical analysis based on input data at the NWDAF. For example, the output data may comprise a network load level, an AMF load level, a usage failure report of a UE, and information on an on-demand S-NSSAI.

The present disclosure proposes a data format for transmission of input data and analytics data. [Table 12] below shows a format of input data, and [Table 13] below shows a format of analytics data. However, embodiments of the present disclosure are not limited thereto.

**[Table 12]**

| **Information** | **Source** | **Description** |
|---|---|---|
| Timestamps | 5GC NF | A time stamp associated with the collected information. |
| UE registers/de-registers to a Network Slice/Network Slice instance | AMF(s) | AMF reports that a UE registered or deregistered to a S-NSSAI or to a S-NSSAI and NSI ID. |
| Number of UEs served by the AMF | AMF(s) | AMF reports the total number of UEs served by the AMF per S-NSSAI or per S-NSSAI and NSI ID. (NOTE 1) |
| On-demand S-NSSAI | AMF(s) | AMF reports the on-demand S-NSSAI. |
| Network load of on-demand S-NSSAI | AMF(s) | AMF reports the network load input data about on-demand S-NSSAI. |
| The usage failure reports about on-demand S-NSSAI | AMF(s) | AMF reports that requests to use the on-demand S-NSSAI after being deleted from allowed NSSAI per on-demand S-NSSAI. |
| The usage failure reports about UE. | AMF(s) | AMF reports usage failure per the UE. |

As defined in [Table 12], the input data may comprise at least one of a time stamp, whether a UE is registered to a network slice or a network slice instance, a number of UEs supported by the AMF, an on-demand S-NSSAI, a network load of the on-demand S-NSSAI, a usage failure report for the on-demand S-NSSAI, and a usage failure report for the UE.

**[Table 13]**

| **Information** | **Description** |
|---|---|
| On-demand S-NSSAI | Identification of the On-demand Network Slice. |
| On-demand Network Slice instances (1..max) | List of Network Slice instance(s) within the on-demand S-NSSAI. |
| Network load level | The average load of the network over the Analytics target period. |
| The number of usage failure reports | The number of usage failure reports. |
| AMF load level | The average load of the AMF over the Analytics target period. |

As defined in [Table 13], the analytics data may comprise at least one of an on-demand S-NSSAI, on-demand network slice instances, a network load level, a number of usage failure reports, and an AMF load level.

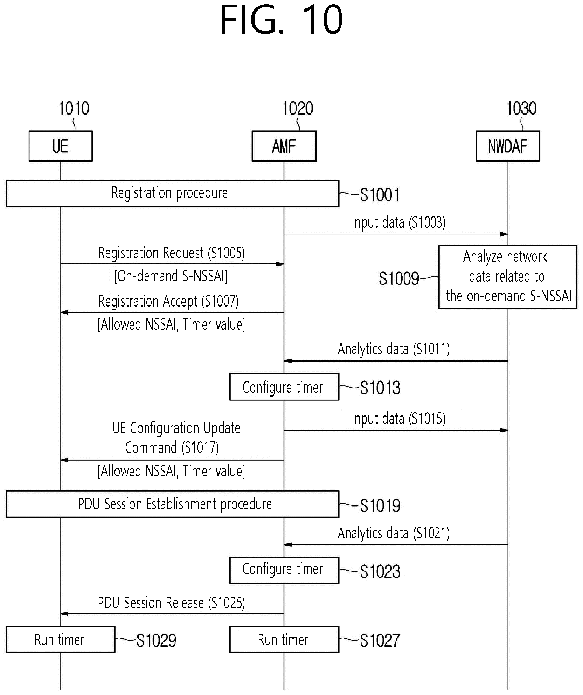

FIG. 10 illustrates an example of a signaling procedure for configuring a slice deregistration inactivity timer according to an embodiment of the present disclosure.

Referring to FIG. 10, in step S1001, a UE (1010) and an AMF (1020) perform a registration procedure. That is, the UE (1010) and the AMF (1020) perform an initial registration procedure. Specifically, the UE (1010) may transmit a registration request message for initial registration to the AMF (1020), and the AMF (1020) may transmit a registration accept message to the UE (1010). The registration accept message may comprise an allowed NSSAI.

In step S1003, the AMF (1020) transmits input data to the NWDAF (1030). In other words, the AMF (1020) may collect input data required to analyze network data related to a load of the on-demand S-NSSAI for a certain period of time, and transmit the collected input data to the NWDAF (1030). As shown in [Table 12], the input data may comprise at least one of a time stamp, whether a UE is registered to a network slice or a network slice instance, a number of UEs supported by the AMF, an on-demand S-NSSAI, a network load of the on-demand S-NSSAI, a usage failure report for the on-demand S-NSSAI, and a usage failure report for the UE. The input data may be transmitted to the NWDAF (1030) at each designated event occurrence or at designated intervals.

In step S1005, the UE (1010) transmits a registration request message to the AMF (1020). In other words, the UE (1010) transmits a registration request message comprising an on-demand S-NSSAI to the AMF (1020) to configure the on-demand S-NSSAI. The on-demand S-NSSAI may be determined based on at least one of an allowed NSSAI and a service required by a running application of the UE (1010). When the registration request message is received, the AMF (1020) may perform an operation for registration of the UE (1010). For example, the AMF (1020) may configure a network slice for the UE (1010) based on the on-demand S-NSSAI included in the registration request message.

In step S1007, the AMF (1020) transmits a registration accept message to the UE (1010). The registration accept message comprises an allowed NSSAI and a timer value. Here, the allowed NSSAI comprises the on-demand S-NSSAI included in the registration request message, and the timer value comprises a slice deregistration inactivity timer value for the on-demand S-NSSAI. In this case, the slice deregistration inactivity timer value for the on-demand S-NSSAI may be a value received from a PCF and UDM.

Meanwhile, in step S1009, the NWDAF (1030) analyzes network data related to the on-demand S-NSSAI. In other words, the NWDAF (1030) may obtain analytics data by analyzing network data related to the on-demand S-NSSAI based on the input data.

In step S1011, the NWDAF (1030) transmits analytics data to the AMF (1020). As defined in [Table 13], the analytics data may comprise at least one of an on-demand S-NSSAI, an on-demand network slice instance, a network load level, a number of usage failure reports, and an AMF load level.

In step S1013, the AMF (1020) configures a timer. In other words, the AMF (1020) configures or updates a slice deregistration inactivity timer value of the UE and the AMF for the on-demand S-NSSAI based on the analytics data received from the NWDAF (1030).

In step S1015, the AMF (1020) transmits input data to the NWDAF (1030). In other words, the AMF (1020) may collect input data required to analyze network data related to the load of the on-demand S-NSSAI for a certain period of time after step S1003, and transmit the collected input data to the NWDAF (1030).

In step S1017, the AMF (1020) transmits a UE configuration update command message to the UE (1010). In other words, the AMF (1020) transmits a UE configuration update command message comprising an allowed NSSAI and a slice deregistration inactivity timer value of the UE for the on-demand S-NSSAI to the UE (1010).

In step S1019, the UE (1010) and the AMF (1020) perform a PDU session establishment procedure. Specifically, a PDU session between the AMF (1020) and the UE (1010) may be established by the UE (1010) transmitting a PDU session establishment request message to the AMF (1020) and the AMF (1020) transmitting a PDU session establishment accept message to the UE (1010).

Meanwhile, in step S1021, the NWDAF (1030) transmits analytics data to the AMF (1020). That is, the NWDAF (1030) transmits analytics data obtained based on the input data of step S1015 to the AMF (1020). The analytics data has a data format as defined in [Table 13].

In step S1023, the AMF (1020) configures a timer. In other words, the AMF (1020) maintains or updates a slice deregistration inactivity timer value of the UE and the AMF for the on-demand S-NSSAI based on the analytics data received from the NWDAF (1030).

In step S1025, the AMF (1020) transmits a PDU session release message to the UE (1010). When a PDU session termination event occurs, the AMF (1020) transmits a PDU session release message for PDU session termination to the UE (1010).

After transmitting the PDU session release message, in step S1027, the AMF (1020) runs a slice deregistration inactivity timer. That is, after transmitting a PDU session release message related to the on-demand S-NSSAI to the UE, when it is detected that no PDU session using the corresponding on-demand S-NSSAI exists any longer, the AMF (1020) runs the slice deregistration inactivity timer of the AMF for the on-demand S-NSSAI.

When the PDU session release message is received, in step S1029, the UE (1010) runs a slice deregistration inactivity timer. That is, when a PDU session release message related to the on-demand S-NSSAI is received, the UE (1010) determines that no PDU session using the corresponding on-demand S-NSSAI exists any longer, and runs the slice deregistration inactivity timer of the UE for the on-demand S-NSSAI.

Operations of a UE or AMF for mobility management-based network slice usage control are defined as shown in [Table 14].

**[Table 14]**

| | |
|---|---|
| 4.6.2.9 Mobility management based network slice usage control | |
| If the UE and network support network slice usage control, the AMF monitors network slice usages by running a slice deregistration inactivity timer per on-demand S-NSSAI and access type. The AMF also provides a list of one or more on-demand S-NSSAIs in the configured NSSAI and the slice deregistration inactivity timer per on-demand S-NSSAI to the UE in the REGISTRATION ACCEPT message or in the UE Configuration Update Command message. If the UE initiates the PDU session establishment procedure associated with the on-demand S-NSSAI, the UE includes the S-NSSAI in the Requested NSSAI IE of the REGISTRATION REQUEST message. | |
| The slice deregistration inactivity timer is: | |
| | a) started when the S-NSSAI is not used by any PDU session over the corresponding access type or when the S-NSSAI is not used by all of the user plane resources of the MA PDU session, and |
| | b) stopped and reset when at least a PDU session associated with the S-NSSAI is successfully established or a MA PDU session associated with the S-NSSAI is successfully established or the S-NSSAI is removed from the Allowed NSSAI. |
| AMF determines the slice deregistration timer by receiving the slice deregistration timer value from PCF and UDM or by receiving the analytics information about on-demand S-NSSAI from NWDAF as defined in TS 23.288 [86] | |
| Upon expiry of the slice deregistration inactivity timer, the AMF and the UE locally remove the S-NSSAI from the allowed NSSAI over the access type. | |
| | NOTE: The network slice usage control feature is not supported in roaming scenarios. |

According to [Table 14], an AMF provides a slice deregistration inactivity timer per on-demand S-NSSAI to a UE via a registration accept message or a UE configuration update command message. In addition, when a UE initiates a PDU session establishment procedure associated with an on-demand S-NSSAI, the UE transmits a registration request message comprising the corresponding on-demand S-NSSAI in a requested NSSAI IE. The AMF receives a slice deregistration inactivity timer value from a PCF or UDM, or determines a slice deregistration inactivity timer value based on a result of network data analysis related to the on-demand S-NSSAI received from NWDAF.

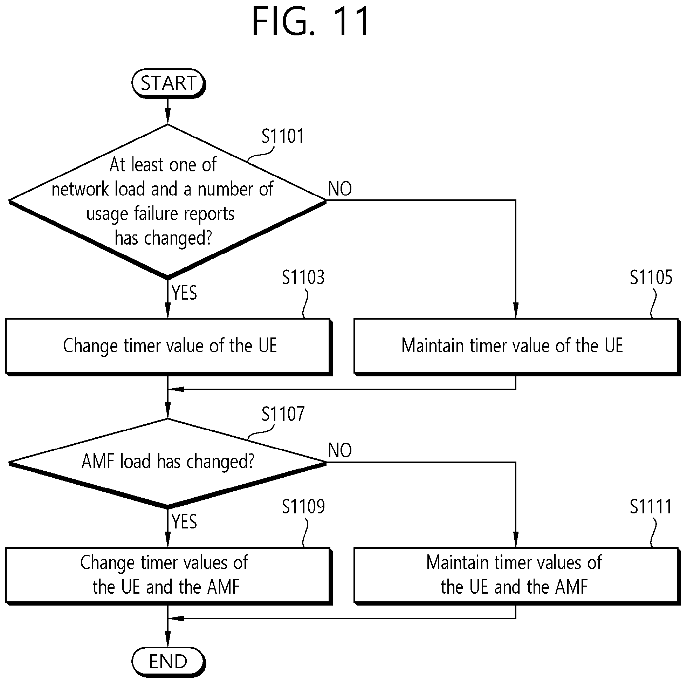

FIG. 11 illustrates an example of a slice deregistration inactivity timer adjustment procedure according to an embodiment of the present disclosure. FIG. 11 illustrates a method performed by a network node. The network node comprises an AMF. The operations of FIG. 11 may be understood as detailed operations of S905, S911, or S921 of FIG. 9.

Referring to FIG. 11, in step S1101, a network node checks whether at least one of network load and a number of usage failure reports has changed. The network node checks whether at least one of network load and a number of usage failure reports has changed by comparing a network load and a number of usage failure reports for the on-demand S-NSSAI at a current time point with a network load and a number of usage failure reports for the on-demand S-NSSAI at a previous time point. Here, the network load and the number of usage failure reports at the current time point and the previous time point may be a network load and a number of usage failure reports for the on-demand S-NSSAI received by the AMF from the NWDAF at the current time point and the previous time point.

When at least one of network load and a number of usage failure reports has changed, in step S1103, the network node changes a timer value of the UE. Here, the timer value of the UE refers to a slice deregistration inactivity timer value of the UE for the on-demand S-NSSAI. According to an embodiment, when a network load for the on-demand S-NSSAI at the current time point and a network load at the previous time point differ, the network node may change a slice deregistration inactivity timer value of the UE for the corresponding on-demand S-NSSAI based on a change amount of the network load for the on-demand S-NSSAI. For example, when a network load for the on-demand S-NSSAI at the current time point is smaller than a network load at the previous time point, the network node may decrease a slice deregistration inactivity timer value of the UE for the corresponding on-demand S-NSSAI by the decreased network load amount. As another example, when a network load for the on-demand S-NSSAI at the current time point is greater than a network load at the previous time point, the network node may increase a slice deregistration inactivity timer value of the UE for the corresponding on-demand S-NSSAI by the increased network load amount.

According to an embodiment, when a number of usage failure reports for the on-demand S-NSSAI at the current time point and a number of usage failure reports at the previous time point differ, the network node may change a slice deregistration inactivity timer value of the UE for the corresponding on-demand S-NSSAI based on a change amount of the number of usage failure reports for the on-demand S-NSSAI. For example, when a number of usage failure reports for the on-demand S-NSSAI at the current time point is greater than a number of usage failure reports at the previous time point, the network node may increase a slice deregistration inactivity timer value of the UE for the corresponding on-demand S-NSSAI by the increased number.

When at least one of network load and a number of usage failure reports has not changed, in step S1105, the network node maintains a timer value of the UE. According to an embodiment, when a network load for the on-demand S-NSSAI at the current time point and a network load at the previous time point are the same, the network node may maintain a slice deregistration inactivity timer value of the UE for the on-demand S-NSSAI. According to an embodiment, when a number of usage failure reports for the on-demand S-NSSAI at the current time point and a number of usage failure reports at the previous time point are the same, the network node may maintain a slice deregistration inactivity timer value of the UE for the on-demand S-NSSAI.

In step S1107, the network node checks whether an AMF load has changed. The network node checks whether an AMF load has changed by comparing an AMF load for the on-demand S-NSSAI at the current time point with an AMF load at the previous time point. Here, the AMF load at the current time point and the previous time point may be an AMF load for the on-demand S-NSSAI received by the AMF from the NWDAF at the current time point and the previous time point.

When the AMF load has changed, in step S1109, the network node changes timer values of the UE and the AMF. Here, the timer values of the UE and the AMF refer to a slice deregistration inactivity timer value of the UE for the on-demand S-NSSAI and a slice deregistration inactivity timer value of the AMF. According to an embodiment, when an AMF load for the on-demand S-NSSAI at the current time point and an AMF load at the previous time point differ, the network node may change a slice deregistration inactivity timer value of the UE and a slice deregistration inactivity timer value of the AMF for the corresponding on-demand S-NSSAI based on a change amount of the AMF load for the on-demand S-NSSAI. For example, when an AMF load for the on-demand S-NSSAI at the current time point is smaller than an AMF load at the previous time point, the network node may decrease a slice deregistration inactivity timer value of the UE and a slice deregistration inactivity timer value of the AMF for the corresponding on-demand S-NSSAI by the decreased AMF load amount. As another example, when an AMF load for the on-demand S-NSSAI at the current time point is greater than an AMF load at the previous time point, the network node may increase a slice deregistration inactivity timer value of the UE and a slice deregistration inactivity timer value of the AMF for the corresponding on-demand S-NSSAI by the increased AMF load amount.

When the AMF load has not changed, in step S1111, the network node maintains a timer value of the AMF. According to an embodiment, when an AMF load for the on-demand S-NSSAI at the current time point and an AMF load at the previous time point are the same, the network node may maintain a slice deregistration inactivity timer value of the UE and a slice deregistration inactivity timer value of the AMF for the on-demand S-NSSAI.

As described above, the AMF according to an embodiment of the present disclosure updates a slice deregistration inactivity timer value using NWDAF, and transmits the updated timer value to the UE. In this case, the AMF may adjust the slice deregistration inactivity timer value using an algorithm (e.g., the algorithm described with reference to FIG. 11) based on information analyzed from the NWDAF. In addition, to adjust the slice deregistration inactivity timer, the NWDAF may analyze information on an on-demand S-NSSAI, network load, AMF load, and missed signals between a UE and an AMF received from the AMF, and provide analytics data having a new data format for the on-demand S-NSSAI to the AMF.

Examples of the proposed methods described above can also be included as one of the implementation methods of the present disclosure, so it is clear that they can be considered as types of proposed methods. In addition, the proposed methods described above may be implemented independently, but may also be implemented in the form of a combination (or merger) of some proposed methods. Rules may be defined so that information on whether the proposed methods are applied (or information on the rules of the proposed methods) is notified by the base station to the terminal through a predefined signal (e.g., physical layer signal or higher layer signal).

The present disclosure may be embodied in other specific forms without departing from the technical ideas and essential features described in the present disclosure. Therefore, the above detailed description should not be interpreted as restrictive in all aspects but should be considered as illustrative. The scope of the present disclosure should be determined by reasonable interpretation of the appended claims, and all changes within the equivalent scope of the present disclosure are included in the scope of the present disclosure. In addition, claims that do not have explicit citation relationships in the claims may be combined to form embodiments or may be included as new claims by amendments after filing.

### INDUSTRIAL APPLICABILITY

The embodiments of the present disclosure can be applied to various wireless access systems. Examples of various wireless access systems include 3rd Generation Partnership Project (3GPP) or 3GPP2 systems.

The embodiments of the present disclosure can be applied not only to the various wireless access systems described above, but also to all technical fields that apply the various wireless access systems. Furthermore, the proposed method can also be applied to mmWave and THz communication systems that use ultra-high frequency bands.

Additionally, the embodiments of the present disclosure can also be applied to various applications such as autonomous vehicles and drones.

## Claims

1. A method performed by a network node in a wireless communication system, the method comprising:
receiving a first message requesting registration from a User Equipment (UE);
transmitting a second message accepting the registration to the UE;
establishing a Protocol Data Unit (PDU) session for the UE;
transmitting a third message indicating release of the PDU session; and
starting a slice deregistration inactivity timer related to a slice for the UE,
wherein a value of the slice deregistration inactivity timer is determined based on information obtained using a Network Data Analytics Function (NWDAF) node.

2. The method of claim 1, wherein the network node comprises an Access and Mobility Management Function (AMF) node.

3. The method of claim 2, wherein the information obtained using the NWDAF node comprises at least one of a network load generated between the UE and a network, an AMF load generated at the AMF node, and a number of usage failure reports indicating that a request has been made for a Network Slice Selection Assistance Information (NSSAI) that has already been deleted at the AMF node among allowed NSSAIs.

4. The method of claim 3, further comprising:
periodically transmitting, to the NWDAF, input data required for network data analysis related to the slice for the UE;
receiving, from the NWDAF, analytics data indicating a result of analyzing network data related to the slice for the UE; and
updating the value of the slice deregistration inactivity timer based on the received analytics data.

5. The method of claim 4, wherein the input data comprises at least one of a time stamp, whether the UE is registered to a network slice or a network slice instance, a number of UEs supported by the AMF node, an on-demand Single NSSAI (S-NSSAI) indicating the slice for the UE, a network load for the on-demand S-NSSAI, a usage failure report for the on-demand S-NSSAI, and a usage failure report for the UE.

6. The method of claim 4, wherein the analytics data comprises at least one of an on-demand S-NSSAI indicating the slice for the UE, network slice instances within the on-demand S-NSSAI, a network load level, a number of usage failure reports, and an AMF load level.

7. The method of claim 4, wherein an updated value of the slice deregistration inactivity timer is transmitted to the UE via a registration accept message or a UE configuration update command message.

8. The method of claim 3, wherein updating the value of the slice deregistration inactivity timer comprises:
adjusting the value of the slice deregistration inactivity timer to be transmitted to the UE based on at least one of the network load and the number of usage failure reports.

9. The method of claim 3, wherein updating the value of the slice deregistration inactivity timer comprises:
adjusting the value of the slice deregistration inactivity timer to be transmitted to the UE and a value of the slice deregistration inactivity timer of the AMF based on the AMF load.

10. A method performed by a User Equipment (UE) in a wireless communication system, the method comprising:
transmitting a first message requesting registration to a network node;
receiving a second message accepting the registration from the network node;
establishing a Protocol Data Unit (PDU) session for the UE and a network;
receiving a third message indicating release of the PDU session from the network node; and
starting a slice deregistration inactivity timer related to a slice for the UE,
wherein a value of the slice deregistration inactivity timer is determined based on information obtained, at an Access and Mobility Management Function (AMF) node, from a Network Data Analytics Function (NWDAF) node.

11. A network node in a wireless communication system, the network node comprising:
a transceiver; and
a processor coupled to the transceiver,
wherein the processor is configured to:
receive a first message requesting registration from a User Equipment (UE);
transmit a second message accepting the registration to the UE;
establish a Protocol Data Unit (PDU) session for the UE;
transmit a third message indicating release of the PDU session; and
start a slice deregistration inactivity timer related to a slice for the UE,
wherein a value of the slice deregistration inactivity timer is determined based on information obtained using a Network Data Analytics Function (NWDAF) node.

12. A User Equipment (UE) in a wireless communication system, the UE comprising:
a transceiver; and
a processor coupled to the transceiver,
wherein the processor is configured to:
transmit a first message requesting registration to a network node;
receive a second message accepting the registration from the network node;
establish a Protocol Data Unit (PDU) session for the UE and a network;
receive a third message indicating release of the PDU session from the network node; and
start a slice deregistration inactivity timer related to a slice for the UE,
wherein a value of the slice deregistration inactivity timer is determined based on information obtained, at an Access and Mobility Management Function (AMF) node, from a Network Data Analytics Function (NWDAF) node.

13. A communication apparatus comprising:
at least one processor; and
at least one computer memory coupled to the at least one processor and storing instructions that, when executed by the at least one processor, direct operations comprising:
transmitting a first message requesting registration to a network node;
receiving a second message accepting the registration from the network node;
establishing a Protocol Data Unit (PDU) session for a User Equipment (UE) and a network;
receiving a third message indicating release of the PDU session from the network node; and
starting a slice deregistration inactivity timer related to a slice for the UE,
wherein a value of the slice deregistration inactivity timer is determined based on information obtained, at an Access and Mobility Management Function (AMF) node, from a Network Data Analytics Function (NWDAF) node.

14. A non-transitory computer-readable medium storing at least one instruction, comprising:
the at least one instruction executable by a processor,
wherein the at least one instruction causes an apparatus to:
receive a first message requesting registration from a User Equipment (UE);
transmit a second message accepting the registration to the UE;
establish a Protocol Data Unit (PDU) session for the UE;
transmit a third message indicating release of the PDU session; and
start a slice deregistration inactivity timer related to a slice for the UE,
wherein a value of the slice deregistration inactivity timer is determined based on information obtained using a Network Data Analytics Function (NWDAF) node.
